# EUROPEAN PATENT APPLICATION

(11) **EP 4 641 132 A1**
(43) Date of publication of application: **29.10.2025**
(21) Application number: 24193375.3
(22) Date of filing: 07.08.2024
(51) Int. Cl.: G01B 11/24, G01N 21/88, G01N 21/954

(54) **INSPECTION AND MEASUREMENT SYSTEM AND METHOD FOR HOLLOW CYLINDRICAL OBJECTS**

(30) Priority: 23.04.2024 IN 202421032058
(71) Applicant: Bitmapper Integration Technologies Pvt Ltd., Pune, Maharashtra 411019 (IN)
(72) Inventor: MAHAJAN,, Amit Anil, Cumming, 30041 (US); BAGALKOTE,, Samir Shriram, 411027 Pune, Maharashtra (IN); BANTWAL,, Sharath, 411027 Pune, Maharashtra (IN); DABHI,, Setu, 411057 Pune, Maharashtra (IN); PURI,, Dhruv, 411038 Pune, Maharashtra (IN); PATEL,, Darshan, 395004 Surat, Gujarat (IN)
(74) Representative: Potter Clarkson

(57) **Abstract**

Disclosed is an inspection and measurement system and method for hollow cylindrical objects (100) such as internal gun barrel surface of large caliber gun barrels (150). The system (100) comprises an inspection device (200,500) operatively connected to the controller (400). The controller (400) is configured to receive realtime 2D image and 3D laser scan data captured by the inspection device (200,500) to generate 2D and 3D maps of the internal surface of the hollow cylindrical object and provide a means of visualization and interpretation of inspection and measurement data.

## Description

### TECHNICAL FIELD

The present subject matter relates generally to the field of robotic systems for inspecting hollow cylindrical objects, and more specifically, to an inspection and measurement system for straight hollow cylindrical objects such as internal gun barrel surfaces of large caliber gun barrels.

### BACKGROUND

Large caliber guns normally serve as the primary ordnance system due to their extended firing range and enhanced accuracy. The category of large caliber guns encompasses a range of systems, from 76-caliber Naval guns to 155-caliber artillery and tank guns, as well as various mortar systems. Each time a round is fired, the gun barrel is exposed to high pressure, temperature, shocks, and friction, in addition to a corrosive mixture of gases and residue generated after the combustion of propellants. This process causes wear and erosion on the internal surface of the gun barrel. Wear and erosion represent one of several failure mechanisms impacting the operational effectiveness and lifespan of large caliber gun barrels. Barrel wear is inevitable and progresses with each firing, directly influencing chamber pressures and, consequently, the muzzle velocities of the fired shells. The loss of muzzle velocity affects range, accuracy, and other factors, often leading to the condemnation of a barrel due to wear before it reaches the end of its fatigue life.

Despite ongoing efforts to develop and modernize gun systems, the inspection and measurement of gun barrels remain relatively unexplored. Various methods are employed for gun barrel inspection, including the gun borescope, which allows investigators to closely examine the gun barrel surface along its length but lacks the ability to measure the depth of erosion. Pullover gauges, star gauges, and dial gun barrel gauges are indicator-type devices used to inspect dimensional variations inside a barrel by measuring the gun barrel diameter at different axial locations.

These measurement tools aid in the initial estimation of wear or erosion. Star gauges find use in gun barrel manufacturing units for acceptance after manufacturing, initial proof-firing tests, and developmental tests. Dial gun barrel gauges can be utilized at any time after firing to check for wear. Consistent recording after routine checkups provides information on when barrel wear occurs, facilitating the calculation of the decisive time to consider replacing the barrel. Following are the important limitations of the existing methods.

Regarding the visual inspection of gun barrels using a gun borescope or mirror gauge, the inspector must insert the gun borescope attached to a long pole manually and either view the gun barrel surface through eyepiece on the scope or the camera feed on the display screen. In a typical inspection process, pushing or pulling the gun borescope into the gun barrel manually with a watch on the axial distance of camera inside the barrel and an angle at which the camera is aiming and performing inspection simultaneously is difficult, time consuming and error prone. Also, all inspection parameters are recorded or noted manually, which is also time-consuming and error prone. The judgment on gun barrel erosion or any possible surface defect is based on operators' skills and experience. The method is purely qualitative and does not provide quantitative assessment of gun barrel erosion.

A gauge-based measurement can only provide the data of change in gun barrel diameter at specified location inside the barrel. In this case also, the precision of measurement depends on operators' skills. Moreover, the measurement process is manual, tiresome and time consuming. The method does not provide information on surface condition, defect type, count, size, and location of the defect inside the gun barrel. The data is mostly recorded on hard copies, hence performing the analysis, and keeping the traceability of historical records and interpreting the data is difficult.

All the mentioned methods are either based on visual examination or the measurement of changes in gun barrel size dimensions at specific locations of the entire gun barrel length. Moreover, a skilled and experienced operator is required to inspect and interpret the observation and careful measurement. All the above-mentioned methods need human assistance, due to which the accuracy and repeatability of data acquisition is difficult to achieve.

Besides wear and erosion, the fatigue life of large caliber gun barrels is affected by surface defects formed on the gun barrel surface during firing, which propagates with successive firings. Excessive temperature, pressure, friction, and interaction with corrosive gases, and their cumulative effects, can introduce various surface defects such as heat cracks, deep scoring and scratches, cracks, pitting, and deformation on the barrel surface. If not periodically monitored, these defects not only impact gun performance, affecting range and accuracy, but also pose serious risks like explosions and barrel bursts, threatening the lives of gun operators.

Thus, there is need of a more advanced method that not only provide features of visual inspection and accurate objective measurement but also provide a less complex way to analyze and interpret the inspection data for accurate estimation of remaining useful life of gun barrels.

### OBJECTIVES OF INVETION

An objective of one or more embodiments of the present invention is to provide technological solutions that address the limitations in the prior art and to solve the problems depicted in the background by providing a smart inspection and measurement device.

Another objective of one or more embodiments of the present invention is to inspect the defects in an internal surface of a cylindrical hollow cylindrical object.

Yet another objective of one or more embodiments of the present invention is to oversee a weapon's health through the examination of its barrel.

Yet another objective of one or more embodiments of the present invention is to streamline the process of inspecting and measuring the weapon's health by integrating automation.

Yet another objective of one or more embodiments of the invention is to provide a single device that combines vision inspection and objective measurement methods for monitoring the weapon's health.

Yet another objective of one or more embodiments of the present invention is to inspect the gun barrel surface as a safety assessment for detection, localization and measurement of any surface defects present on the gun barrel surface, wherein the surface defects can be pits, erosion, wear, scratches, dents or cracks.

Yet another objective of one or more embodiments of the invention is to impart AI based defect detection and localization features using image processing and machine learning computer algorithms that perform the tasks of a skilled operator performing gun barrel inspection.

Yet another objective of one or more embodiments of the invention is to create a digital database of inspection and measurement data of gun barrels to perform prediction and estimation of remaining useful life of gun barrel before its fatigue" failure based on the various parameters.

### SUMMARY

Embodiments of the present disclosure put forward technological improvements as solutions to one or more of the above-mentioned technical problems.

According to a first aspect of the present disclosure, there is provided an inspection and measurement system for a hollow cylindrical object, the system comprising:
an inspection device which includes a crawling unit and an inspection head, wherein:
   the inspection head comprises a first sensor and a second sensor, each for sensing properties of an internal surface of the hollow cylindrical object; and
   the crawling unit is configured to move the inspection head along the hollow cylindrical object; and
a controller, which is configured to:
   activate the crawling unit and the inspection head such that the inspection head is moved along the hollow cylindrical object and such that the first sensor provides 2-dimensional image data of the internal surface of the hollow cylindrical object;
   process the 2-dimensional image data to identify any surface defects in the internal surface of the hollow cylindrical object and to determine the location on the internal surface of those surface defects;
   activate the crawling unit and the inspection head such that the inspection head is moved along the hollow cylindrical object and such that the second sensor provides depth-data associated with the identified surface defects in the internal surface of the hollow cylindrical object; and
   process the 2-dimensional image data and the depth-data in order to determine one or more parameters of the identified surface defects.

The controller may be configured to apply an artificial intelligence algorithm when processing the 2-dimensional image data to identify any surface defects in the internal surface of the hollow cylindrical object.

The one or more parameters of the identified surface defects comprise:
a maximum depth of the identified surface defect;
a volume of the identified surface defect;
a type of the identified surface defect; and
a change in internal diameter of the hollow cylindrical object.

The controller may be further configured to determine the number of identified surface defects in the hollow cylindrical object.

The controller may be configured to:
combine the 2-dimensional data and the depth-data in order to provide combined-data; and
process the combined-data in order to determine the one or more parameters of the identified surface defects.

The first sensor may have a field of view that includes the entire circumference of the internal surface of the hollow cylindrical object. The second sensor may have a field of view that includes only a subset of the entire circumference of the internal surface of the hollow cylindrical object.

The inspection head may be rotatably connected to the crawling unit.

The controller may be configured to determine the locations of the surface defects with reference to an open end of the hollow cylindrical object.

The controller may be configured to:
activate the crawling unit and the inspection head such that the second sensor only provides depth-data associated with regions of the internal surface of the hollow cylindrical object that include the identified surface defects.

The first sensor may include at least one camera with integrated illumination or LED lights.

The second sensor may comprise a laser scanning unit that includes a laser distance sensor.

The crawling unit may include,
a plurality of driving wheels and a plurality of idler wheels configured radially to maintain a continuous contact with an inner surface of the hollow cylindrical object to be inspected;
a motor with a rotary encoder that drives the plurality of driving wheels;
a linear encoder connected to one of the idler wheels, wherein the linear encoder is configured to measure linear displacement of the inspection device; and
a plurality of connectors electrically coupled to the electronics unit.

The driving wheels may be spring loaded wheels that maintain concentricity with the longitudinal axis of the hollow cylindrical object to be inspected.

The plurality of idler wheels may be configured to provide balance and stability to the inspection device when passing through the internal surface of the hollow cylindrical object to be inspected.

There is also disclosed a method for inspection and measurement of a hollow cylindrical object using an inspection device, wherein the inspection device comprises:
an inspection head that comprises a first sensor and a second sensor, each for sensing properties of an internal surface of the hollow cylindrical object; and
a crawling unit that is configured to move the inspection head along the hollow cylindrical object;
wherein the method comprises:
activating the crawling unit and the inspection head such that the inspection head is moved along the hollow cylindrical object and such that the first sensor provides 2-dimensional image data of the internal surface of the hollow cylindrical obj ect;
processing the 2-dimensional image data to identify any surface defects in the internal surface of the hollow cylindrical object and to determine the location on the internal surface of those surface defects;
activating the crawling unit and the inspection head such that the inspection head is moved along the hollow cylindrical object and such that the second sensor provides depth-data associated with the identified surface defects in the internal surface of the hollow cylindrical object; and
processing the 2-dimesnional image data and the depth-data in order to determine one or more parameters of the identified surface defects.

There is also disclosed an inspection and measurement system for straight hollow cylindrical objects comprising:
an inspection device operatively connected to a controller, the inspection device includes, a crawling unit, and an inspection head rotatably connected to a crawling unit, wherein the inspection device is securely placed to be in close proximity with the surface of a straight hollow cylindrical object and is configured to inspect and scan the internal radial surface thereof,
wherein the controller is configured to control the movements of the inspection device and perform tasks of receiving, analyzing, and processing the data collected by the inspection device, perform computations to detect, identify, classify and localize surface defects by means of artificial intelligence and image processing and deep leaning modules, measure and quantify the geometric parameters of internal surface of straight hollow cylindrical object and provide a means of visualization and interpretation of inspection and measurement data.

The inspection head may include a rotating mechanism, an image acquisition unit, and a laser scanning unit operatively coupled to an electronics unit performing high speed data acquisition and synchronization to integrate and fuse data collected by a plurality of sensors therein.

The inspection head may be configured to map and measure the surface defects of an internal surface of the straight hollow cylindrical object in terms of geometric parameters and measurements of surface defects in two and three dimensions respectively.

The inspection device may be connected to the controller in a wired manner by means of a connecting medium.

The inspection device may be connected to the controller in a wireless manner.

The inspection head may be is configured to rotate 360 degrees in both clockwise or anticlockwise directions on its own axis.

The inspection head may include a rotary drive mechanism that drives a rotating head.

The rotary drive mechanism may house a slip ring and gear assembly mounted with a set of bearings and is driven by a motor with a rotary encoder.

The image acquisition unit may include at least one camera with an integrated illumination or LED lights.

The image acquisition unit may be configured to capture real-time images or videos of an internal surface of the straight hollow cylindrical object for generating a 2D surface map thereof.

The laser scanning unit may include a laser distance sensor.

The electronics unit may include a high-speed micro-controller based electronic circuitry operatively coupled to an inertial measurement sensor (IMU), a proximity sensor, an accelerometer, a magnetometer, a gyro-sensor, a rotary and linear encoder but not limited thereto.

The crawling unit may include,
a plurality of driving wheels and a plurality of idler wheels configured radially to maintain a continuous contact with an inner surface of the straight hollow cylindrical object to be inspected;
a motor with a rotary encoder that drives the plurality of driving wheels;
a linear encoder connected to one of the idler wheels, the linear encoder measures linear displacement of the inspection device; and
a plurality of connectors electrically coupled to the electronics unit.

The driving wheels may be spring loaded wheels that maintains concentricity with the longitudinal axis of straight hollow cylindrical object to be inspected.

The plurality of connectors may include a first connector for power and signal and a second connecter for data connectivity.

The plurality of driving wheels may be configured to provide smooth and stable linear movement of the inspection device when passing through the internal surface of the straight hollow cylindrical object to be inspected.

The plurality of idler wheels may be configured to provide balance and stability to the inspection device when passing through the internal surface of the straight hollow cylindrical object to be inspected.

The motor with a rotary encoder may drive the plurality of driving wheels by means of a gear.

The crawling unit may be coupled to an expansion mechanism having
a radially expandable drive unit;
a radially expandable idler unit;
a junction unit connecting the drive unit with the idler unit; and
a motor rotatably coupled to a ball screw that actuates radial expansion of the drive unit.

The ball screw may actuate radial expansion of the drive unit and the idler unit by means of a scissor mechanism.

The radially expandable drive unit may include,
a drive motor coupled to a fix end and a motor mounting bracket;
a main drive gear coupled to the rocker arm;
a plurality of drive wheels, each of the plurality of drive wheels maintains a continuous contact with the inner diameter of the straight hollow cylindrical objects, and provide a linear motion;
a rocker arm coupled to the drive wheels and to a movable end;
a plurality of pivot brackets, each of the plurality of pivot brackets coupled to one drive wheel;
a central ball screw fitted on a driver shaft; and
a motor adapter mounted on the driver shaft.

The controller may include a central processing module, a graphical processing module, graphical user interface module, a memory storage module and an application module having a 2D and 3D graphics module, an image processing and deep leaning module, an AI module and a data analytics and visualization module.

The inspection device may be a cylindrically shaped vehicle body.

There is also disclosed a method for inspection and measurement of a straight hollow cylindrical object comprising an inspection device operatively connected to a controller the method comprising steps of:
coupling the inspection device to the controller;
calibrating the inspection device by means of a standardized calibration unit;
attaching the inspection device to the straight hollow cylindrical object;
performing data acquisition, by the inspection device;
performing data synchronization by an electronics unit in the inspection device;
performing dapta analysis and visualization in 2D and 3D environment, by the controller; and
performing data interpretation by the controller.

The controller may be configured to receive realtime 2D image and 3D laser scan data captured by the inspection device to generate 2D and 3D maps of the internal surface of the straight hollow cylindrical object.

This summary is provided to introduce concepts related to an AI based robotic system for inspection and measurements of the straight hollow cylindrical object especially large caliber gun barrels. This summary is neither intended to identify essential features of the present invention nor intended to determine or limit the scope of the present invention.

Before the present subject matter relating to a system for inspection and measurements of a straight hollow cylindrical object, it is to be understood that this application is not limited to the system described, as there can be multiple possible embodiments that are not expressly illustrated in the present disclosure. It is also to be understood that the terminology used in the description is to describe the implementations or versions or embodiments only and is not intended to limit the scope of the present subject matter.

A system for inspection and measurement of a straight hollow cylindrical objects comprises an inspection device, and a controller connected to the inspection device with or without a cable. The inspection device comprises an inspection head comprising an image acquisition unit, a laser scanner and a motorized rotating mechanism, The rotating mechanism rotates the inspection head around its own axis. The inspection device further comprises a crawling unit to provide linear displacement of inspection device inside the hollow cylindrical object.

During operation, the inspection head rotates and collects real time videos and a plurality of 2D images data associated with an internal surface of the straight hollow cylindrical object via the image acquisition unit and perform a 3D depth measurement to generate 3D topology of the internal surface of straight hollow cylindrical object with help of the laser scanner. The crawling unit maintains continuous contact with the inner surface of the hollow cylinder and provide linear displacement to the inspection device inside the straight hollow cylindrical object. The controller is connected to the inspection device via the main control cable. The controller controls the linear and rotary movement of inspection device and performs tasks like receiving, analyzing, and processing the data collected by the inspection device, perform various computations to detect, identify, classify and localize surface defects using artificial intelligence and image processing based deep learning algorithms, measure and quantify the geometric parameters of internal surface of straight hollow cylindrical object and provides a means of visualization and interpretation of inspection and measurement data. The data thus collected can be used to quantify amount of erosion and wear and estimation of health and remaining useful life of straight hollow cylindrical object especially large caliber gun barrel.

This summary is provided to introduce aspects related to an AI based robotic system for inspection and measurement of the straight hollow cylindrical object. It is to be understood that this application is not limited to the system(s) and methodologies described, as there can be multiple possible embodiments which are not expressly illustrated in the present disclosure. It is also to be understood that the terminology used in the description is for the purpose of describing the implementations or versions or embodiments only and is not intended to limit the scope of the present subject matter. This summary is not intended to identify essential features of the claimed subject matter nor is it intended for use in determining or limiting the scope of the present subject matter.

### BRIEF DESCRIPTION OF THE ACCOMPANYING DRAWINGS

The foregoing detailed description of embodiments is better understood when read in conjunction with the appended drawings for illustrating the disclosure, there are figures in the present document that are just shown as example constructions of the disclosure; however, the disclosure is not limited to the specific system or method disclosed in the document and the drawings.

The present disclosure is described in detail with reference to the accompanying figures. In the figures, the left-most digit(s) of a reference number identifies the figure in which the reference number first appears. The same numbers are used throughout the drawings to refer to various features of the present subject matter.
Figure 1 illustrates a pictorial view of an inspection and measurement system for straight hollow cylindrical objects in accordance with an exemplary embodiment of the present invention,
Figure 2 illustrates an internal view of an inspection device in the inspection and measurement system for straight hollow cylindrical objects in accordance with an exemplary embodiment of the present invention,
Figure 3A illustrates a pictorial view of an inspection head assembled in the inspection and measurement system for straight hollow cylindrical objects in accordance with an exemplary embodiment of the present invention,
Figure 3B illustrates an exploded view of the inspection head assembly in the inspection and measurement system for straight hollow cylindrical objects in accordance with an exemplary embodiment of the present invention,
Figure 4 illustrates an exploded view of the crawling unit in the inspection and measurement system for straight hollow cylindrical objects in accordance with an exemplary embodiment of the present invention,
Figure 5 illustrates an internal view of the inspection device with a radially expandable mechanism in the inspection and measurement system for straight hollow cylindrical objects in accordance with an exemplary embodiment of the present invention,
Figure 6 illustrates an assembly view of an inspection head in the inspection and measurement system for straight hollow cylindrical objects in accordance with an exemplary embodiment of the present invention,
Figures 7A&7B illustrate pictorial views of the crawling unit with expansion mechanism in the inspection and measurement system for straight hollow cylindrical objects in an open and a closed position in accordance with an exemplary embodiment of the present invention,
Figure 8 illustrates a closer view of a radially expandable drive unit assembly in the inspection and measurement system for straight hollow cylindrical objects in accordance with an exemplary embodiment of the present invention,
Figure 9 illustrates a process flow diagram for a method of inspection and measurement of the internal surface of the straight hollow cylindrical objects in accordance with an exemplary embodiment of the present invention,
Figure 10 illustrates a view of data architecture for the inspection and measurement of the internal surface of the straight hollow cylindrical objects in accordance with an exemplary embodiment of the present invention,
Figure 11A illustrates a sample 2D image of an internal surface of a rifled bore captured by an image acquisition unit in the inspection device in accordance with an exemplary embodiment of the present invention,
Figure 11B illustrates a processed 2D image of an internal surface of the rifled bore of figure 11A in accordance with an exemplary embodiment of the present invention,
Figure 12A illustrates 3D point-cloud data of an internal surface of a rifled bore captured by a laser scanning unit in accordance with an exemplary embodiment of the present invention,
Figure 12B illustrates processed 3D point-cloud data of figure 12A in accordance with an exemplary embodiment of the present invention,
Figure 13A illustrates a view of an unwrapped surface topology of raw and processed 3D point-cloud data of an internal surface of a rifled bore captured by a laser scanner in accordance with an exemplary embodiment of the present invention,
Figure 13B illustrates a view of a processed unwrapped surface topology of 3D point-cloud data in figure 13A in accordance with an exemplary embodiment of the present invention,
Figure 14 illustrates a software depiction of a graphical user interface (GUI) with a dashboard showing different views, plots, and tables to provide better visualization and interpretation of inspection and measurement data in accordance with an exemplary embodiment of the present invention.

In the above accompanying drawings, a non-underlined number relates to an item identified by a line linking the non-underlined number to the item. When a number is non-underlined and accompanied by an associated arrow, the non-underlined number is used to identify a general item at which the arrow is pointing.

Further, the figures depict various embodiments of the present subject matter for purposes of illustration only. One skilled in the art will readily recognize from the following discussion that alternative embodiments of the structures and methods illustrated herein may be employed without departing from the principles of the present subject matter described herein.

### DETAILED DESCRIPTION

Some embodiments of this disclosure, illustrating all its features, will now be discussed in detail. The words "comprising," "having," "containing," and "including," and other forms thereof, are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Although a device for inspecting a hollow cylinder, similar or equivalent to those described herein can be used in the practice or testing of embodiments of the present disclosure, the exemplary, the device for inspecting the hollow cylinder is now described.

Various modifications to the embodiment will be readily apparent to those skilled in the art and the generic principles herein may be applied to other embodiments. For example, although the present disclosure will be described in the context of a device for inspecting a straight hollow cylinder, one of ordinary skill in the art will readily recognize that a system can be utilized in any situation, such as in inspection device for a hollow cylinder. The invention is capable of inspecting a barrel gun surface as a safety assessment for detection, localization and measurement of any surface defects present on the gun barrel surface, wherein the surface defects can be pits, erosion, wear, scratches, dents or cracks. Thus, the present disclosure is not intended to be limited to the embodiments illustrated but is to be accorded the widest scope consistent with the principles and features described herein.

In one aspect, a system for AI based automated inspection and measurement of a straight hollow cylindrical objects is disclosed.

The system comprises a robotic inspection and measurement device connected to a main controller unit in a wired or wireless manner.

In an embodiment, the main controller unit consists of a main computer having a central processing module, a graphical processing module, a memory storage module. The main controller hosts a software application module which communicates with computing system and inspection and measurement device and provides a graphical user interface module to select the switching, speed controlling and overall programming of the inspection and measurement operations of the said device. The application module includes various software modules such as a 2D and 3D graphics module, image processing and deep learning module, an AI module, data analytics and visualization module are installed in the controller. The controller also provides power and data interface to the robotic inspection and measurement device. The main controller unit receives electric power either from an external battery or from the external power source with a suitable adapter known in art.

The robotic inspection and measurement device, hence further referred as an "Inspection Device" can include a cylindrically shaped vehicle body. The Inspection device comprises an inspection head, and a crawling unit.

The inspection head can comprise of an image acquisition unit, and a laser scanning unit, both coupled to an electronics unit, particularly an electronic sensor fusion unit and a rotating mechanism.

The image acquisition unit can comprise of a plurality of cameras integrated with LED lights. The scanning unit can use a laser distance sensor. The image acquisition unit can capture real-time images or videos of an internal surface of the straight hollow cylindrical object. The images captured by the image acquisition unit can help in generating a 2D surface map of an internal surface of the straight hollow cylindrical object.

The laser distance sensor can use a laser to scan and measure the internal surface and provide point cloud data to generate a 3D map of the internal surface of the straight hollow cylindrical object. The image acquisition unit and a laser scanning unit can be configured to provide a measurement of the internal surface of the straight hollow cylindrical object in terms of geometric parameters and measurements of surface defects in two and three dimensions.

The electronics unit can comprise of a micro-controller-based electronics interface for various digital and analog inputs and outputs and an interface for power and data signals. The electronics unit can use the micro-controller that performs high speed data acquisition and synchronization to integrate and fuse data collected by various sensors. The micro-controller can be a high-speed processor like FPGA or the like. The digital and analog inputs and outputs can comprise of various sensors types not limited to an inertial measurement sensor or IMU, a proximity sensor, an accelerometer, a magnetometer, a gyro-sensor, a rotary and a linear encoder and other sensors known in art.

The rotating mechanism can include a motor, the rotary encoder, a slip ring, and the linear encoder. The motor can allow the inspection head to freely rotate 360 degrees along its own axis. The motor can be connected with the inspection head. The motor can be configured to provide a 360-degree rotation to the inspection head to inspect and measure the internal surface of the straight hollow cylindrical object. As the inspection head rotates, the image acquisition unit can provide real time video feed to the main controller and capture a plurality of 2D images. The laser scanning unit can scan the internal radial surface based on the detected defect coordinates captured by an image acquisition unit to generate the 2D and the 3D topology of the internal surface of the hollow cylindrical object.

The crawling unit can comprise a plurality of drive wheels, a plurality of idler wheels, a radial expansion unit, an additional rotary encoder, a gear, a drive motor, a plurality of connectors for power signal, and for data signal. The plurality of drive wheels can be configured to maintain continuous contact with an inner surface of the straight hollow cylindrical object.

In one embodiment, the crawling unit comprises a plurality of radially expandable arms. The expandable arms provide flexibility and adaptability to suit a range of straight hollow cylindrical objects of different diameters or calibers. The plurality of expandable arms can include the plurality of drive wheels and a gear. The plurality of drive wheels can be connected to an encoder. The plurality of expandable arms can expand radially to maintain concentricity and anchoring on an inner surface of the straight hollow cylindrical object. The drive wheel unit can include a fix end, a motor mounting bracket, a drive motor, a main drive gear, a rocker arm with gear train housing, a drive wheel, a pivot bracket, a movable end, a ball screw, a drive shaft, and a motor adapter. The plurality of wheels can maintain a continuous contact with an inner surface of the straight hollow cylindrical object. Each of the wheels can be configured to provide a linear displacement. The controller can be connected to the radially expandable inspection device. The controller can control the movement of the crawling unit and the inspection head for inspecting a straight hollow cylindrical object.

In another aspect, the present invention provides a method for inspection and measurement of straight hollow cylindrical objects, preferably a gun barrel, for generating the inspection and measurement data to monitor the condition of the gun barrel that can be further used for estimation of effective service life of the gun barrels.

During operation, initially, a calibration unit is attached to a straight hollow cylindrical object, preferably the gun barrel, by means of plurality of bolts and locking nuts attached radially or by some other means known in the art. The calibration unit can be a straight hollow cylindrically shaped object of specific known dimensions. The calibration unit can be concentric with the straight hollow cylindrical object when it is attached to the straight hollow cylindrical object.

In a first stage, the inspection device is connected to a main control unit with a main cable and then inserted inside the calibration unit. The main controller is then powered ON. Once the main controller is powered ON, and the calibration process is initiated by the user through a graphical user interface, a predefined set of software instructions actuates the inspection device and drives it along the length of calibration unit while rotating the inspection head on its own axis.

During the calibration process, all sensors connected to the inspection device as described in the previous section are calibrated with respect to the calibration unit in terms of one or more of: inspection head position and angle of rotation, linear position along the axis of calibration unit, camera calibration and laser distance sensor calibration, proximity sensor zeroing etc. At the end of the calibration process, the inspection device resets itself automatically to a home position with respect to the calibration unit and gets ready for actual inspection and measurement cycle.

In a second stage, the plurality of wheels of the crawling unit provides a linear displacement while the inspection head rotates along its own axis inside of the straight hollow cylindrical object to be inspected. During this stage, the inspection head can capture a plurality of images and videos using the image acquisition unit. The videos and images captured can be viewed on the display screen for real-time visualization of the internal surface of the straight hollow cylindrical object on a GUI (graphical user interface), and the data can be stored in the main controller computer memory for further analysis. The image data is fed to a defect detection AI model. The defect detection model is based on an artificial intelligence and image processing - deep learning based algorithm to perform analysis of images. The defect detection model is trained to detect various types of surface defects like scratches, pits, dents, deformation, erosion, protrusions, and cracks. The defect detection model analyzes the captured images and performs tasks like detection, identification, 2D measurement and localization of surface defects mentioned above in synchronization with sensor fusion data. The defect detection algorithm also performs tagging and labeling of defects for each section of the straight hollow cylindrical object scanned along its length.

For each section scanned, the tagged and labeled defect coordinates can be used to position the inspection head for laser scanning. The laser scanning unit scans each tagged and labeled section and captures 3D point cloud data with high precision and accuracy. Thus, the obtained 3D point cloud data is fed to an integrated 3D graphic software to generate the 3D topology of the internal surface of the straight hollow cylindrical object. The graphic software superimposes 2D images and 3D point cloud data and plots a surface map to provide qualitative and quantitative analysis of geometric parameters and surface defects.

The software can implement a unique method for 3D point cloud compression, prioritizing compression without losses and spatial precision to significantly expand data storage capacity. Additionally, it can emphasize seamless integration with standard point cloud file formats, streamlining the import process and promoting compatibility across diverse systems and software applications.

The software can generate analytical reports in terms of plots in 2D and 3D environments and tabulated data for better visualization and interpretation. The report can provide section wise measurement data of geometric parameters of the internal surface of the straight hollow cylindrical object. The parameters may include and are not limited to changes in internal diameter at various sections, expansion, ovality, erosion, straightness, elongation, volumetric losses, volumetric changes, defect types, counts, sizes, and locations etc. The data thus generated can be used to monitor condition and health of the straight hollow cylindrical object, which is especially important in the case of gun barrels. The invention can create and store an inspection and measurement database in local memory or optionally can be stored in the central server for traceability and further analysis.

The periodically collected data can be used to perform prediction and estimation of the remaining useful life of gun barrel before its fatigue failure based on the various parameters.

It should be noted that the above advantages and other advantages will be better evident in the subsequent description. Further, in the subsequent section, the present subject is better explained with reference to the figures. To maintain consistency and brevity of reading, all the figures from 1 to 10 are explained jointly. Further, the following table lists of nomenclature and numberings are used in the figure to illustrate the invention and the nomenclature is further used to describe in the invention the subsequent paragraph.

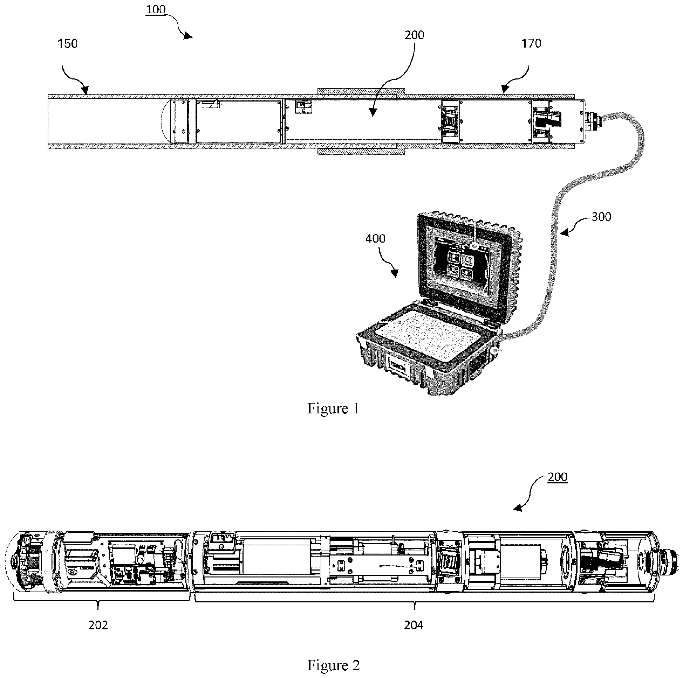

Figure 1 illustrates an inspection and measurement system for straight hollow cylindrical objects (100). The system includes an inspection device (200), which is connected to a main controller (400) via a cable (300). The inspection device (200) is inserted into a gun barrel (150) for inspecting a hollow cylinder, in accordance with an embodiment of the present claimed subject matter.

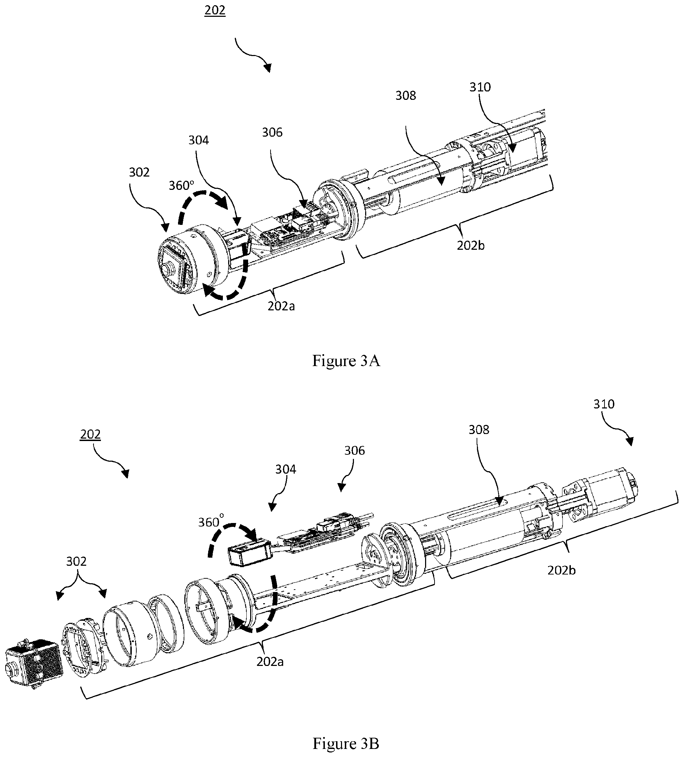

In an embodiment, Figure 2 illustrates an internal view of the inspection device. In an embodiment, the inspection device is a robotic inspection device. This embodiment is related to an inspection device for inspection and measurement of straight hollow cylindrical object of specific caliber or diameter. The robotic inspection device, hence further referred to as an inspection device (200), comprises an inspection head (202) and a crawling unit (204). The inspection head (202) is rotatably connected to the crawling unit (204) in this example. The inspection head (202) can freely rotate 360 degrees in both clockwise or anticlockwise on its own axis to inspect and scan an internal radial surface of the straight hollow cylindrical object, preferably a gun barrel. The construction of the inspection head (202) and the crawling unit (204) is further explained with reference to Figure 3, 4 and 5.

Figure 3A illustrates an assembly view of the inspection head (202), which comprises a freely rotating head (202a) ('rotating head (202a)' hereinafter) and its rotary drive mechanism (202b). The rotating head (202a) comprises of an image acquisition unit (302), a laser scanning unit (304) and an electronics unit (306). The image acquisition unit (302) is an example of a first sensor for sensing properties of an internal surface of a hollow cylindrical object. As will be discussed below, the first sensor can provide 2-dimensional (2D) image data of the internal surface of the hollow cylindrical object. The laser scanning unit 304 is an example of a second sensor for sensing properties of the internal surface of a hollow cylindrical object. As will be discussed below, the second sensor can provide depth-data, such as 3-dimensional (3D) image data, of the internal surface of the hollow cylindrical object.

The image acquisition unit (302), the laser scanning unit (304) and the electronics unit (306) are mounted on a metallic base and are housed in a cylindrical shape metallic enclosure (not shown) with a small window on it, through which a laser beam that is emitted by the laser scanning unit (304) can pass. In one of the exemplary embodiments of the present invention, the electronics unit (306) includes a fusion of a plurality of sensors coupled to a processing unit. In some embodiments, the electronics unit (306) can combine / fuse data that is provided by a plurality of sensors (including the first and second sensors in some examples) in order to provide combined-data.

The image acquisition unit (302) can be a camera or plurality of cameras with an integrated illumination or LED lights. The image acquisition unit is operatively connected to electronics unit (306). The image acquisition unit captures real-time images or videos of an internal surface of the straight hollow cylindrical object. The images captured by the image acquisition unit helps in generating a 2D surface map of the internal surface of the straight hollow cylindrical obj ect.

The laser scanning unit (304) can employ a laser distance sensor to scan and measure the internal surface. When the inspection device (200) moves longitudinally with the help of the crawling unit (204), and the inspection head (202) rotates in a synchronized manner with the help of the rotary drive mechanism (202b), a spiral progression of a scan can be created. With this synchronized spiral movement, the laser scanning unit provides a point cloud data to generate a 3D topography of the internal surface of the straight hollow cylindrical object.

The image acquisition unit (302) and the laser scanning unit (304) are configured to provide mapping and measurement of the internal surface of the straight hollow cylindrical object in terms of geometric parameters and measurements of surface defects in two and three dimensions respectively.

In one example, the controller (400) activates the crawling unit (204) and the inspection head (202) such that the inspection head (202) is moved along the hollow cylindrical object and such that the image acquisition unit (302) provides 2-dimensional image data of the internal surface of the hollow cylindrical object. This can be considered as an initial scanning mode of operation in which the entire internal surface of the hollow cylindrical object is scanned in order to provide data that can be used to identify any surface defects in the internal surface. The image acquisition unit (302) in this example has a field of view that includes the entire circumference of the internal surface of the hollow cylindrical object. For instance, it can be front facing such that the inspection head (202) does not need to be rotated in order to capture the 2-dimensional data. In other examples, it can be a pan and tilt camera, a rotary camera, or a sideways facing camera.

The controller (400) then processes the 2-dimensional image data to identify any surface defects in the internal surface of the hollow cylindrical object and to determine the location on the internal surface of those surface defects. Beneficially, the controller (400) can apply an artificial intelligence algorithm when processing the 2-dimensional image data to identify surface defects. In some examples, a surface detection can be performed automatically by the controller (400). Additionally or alternatively, a human operator can identify surface defects in the 2-dimensional image data. Optionally, the controller (400) can determine a bounding box around the identified surface defect in the 2-dimensional image data. The bounding box can have a regular shape (such as a rectangle or a circle), and optionally it can be presented on a display overlaid on the 2-dimensional image data such that an operator can easily see the surface defect.

The one or more parameters of the identified surface defects can include: a maximum depth of the identified surface defect; a volume of the identified surface defect; a type of the identified surface defect (e.g., crack, scoring, scratch, pit, dent, protrusion, erosion, deformation); and a change in internal diameter of the hollow cylindrical object.

Furthermore, in some examples the controller (400) can determine the number of identified surface defects in the hollow cylindrical object, optionally in a predetermined region of the hollow cylindrical object. For example, the controller (400) can determine the number of identified surface defects in a proportion of the length of the hollow cylindrical object, for instance in each quarter of the length of the hollow cylindrical object.

The controller (400) can determine the locations of the surface defects with reference to an open end of the hollow cylindrical object, for example the open end from which the inspection device (200) enters. For instance, the crawling unit (204) can have wheels that are in contact with the internal surface of the hollow cylindrical object (as discussed below), and the number of rotations of at least one of these wheels can be translated into a distance along the hollow cylindrical object. In some embodiments, this distance can be determined with reference to a calibration unit that can be attached to the hollow cylindrical object, as discussed above.

Then, in what can be considered as a secondary scanning mode of operation, the controller (400) activates the crawling unit (204) and the inspection head (202) such that the inspection head (202) is moved along the hollow cylindrical object and such that the laser scanning unit (304) provides depth-data associated with the identified surface defects in the internal surface of the hollow cylindrical object. The laser scanning unit (304) can have a field of view that includes only a subset of the entire circumference of the internal surface of the hollow cylindrical object. For instance, it can be side-facing such that the inspection head (202) is rotated in order to capture the depth-data. That is, the inspection head (202) can be rotatably connected to the crawling unit (204), and the controller (400) can rotate the inspection head (202) in order to align the laser scanning unit (304) with an identified surface defect. In this example, the controller (400) activates the crawling unit (204) and the inspection head (202) such that the laser scanning unit (304) only provides depth-data associated with regions of the internal surface of the hollow cylindrical object that include the identified surface defects. That is, it does not scan the entire internal surface of the hollow cylindrical object.

The controller (400) then processes the 2-dimensional image data and the depth-data in order to determine one or more parameters of the identified surface defects. In some examples, this can include combining / fusing the 2-dimensional data and the depth-data in order to provide combined-data, and then processing the combined-data in order to determine the one or more parameters of the identified surface defects. Beneficially, determining the parameters of the identified surface defects in this way can enable surface defects to more accurately and reliably be detected. For example, the distance to a surface defect along the hollow cylindrical object can be accurately determined, and in such a way that it is not significantly affected by external disturbances. Also, the system can be made portable such that advantageously the hollow cylindrical object does not have to be disconnected in order for it to be inspected.

The rotary drive mechanism (202b) is connected to the rotating head (202a) at one end. It houses a slip ring (308) and gear assembly mounted with a set of bearings (not shown) and is driven by a motor with a rotary encoder (310). The slip ring (308) is configured to carry the power and data signal connecting wires to provide power and data connectivity to the electronics unit (306) and enables free rotation of rotating head (202a) without twisting of the wires.

The electronics unit (306) comprises of a controller interfaced with various digital and analog inputs and outputs for power and data signals. The electronics unit (306) collects and fuses / combines high frequency data from various sensors. In an exemplary embodiment of the present invention, the electronics unit (306) employs a high-speed micro-controller based electronic circuitry that performs high speed data acquisition and synchronization to integrate and fuse / combine data collected by a plurality of sensors connected thereto. The micro-controller may be a high-speed processor like FPGA or like known in the art. The digital and analog inputs and outputs can comprise various sensor types including but not limited to an inertial measurement sensor or IMU, a proximity sensor, an accelerometer, a magnetometer, a gyro-sensor, a rotary and a linear encoder and other sensors known in the art.

Figure 3B illustrates an exploded view for better visualization of the construction of the inspection head assembly (202).

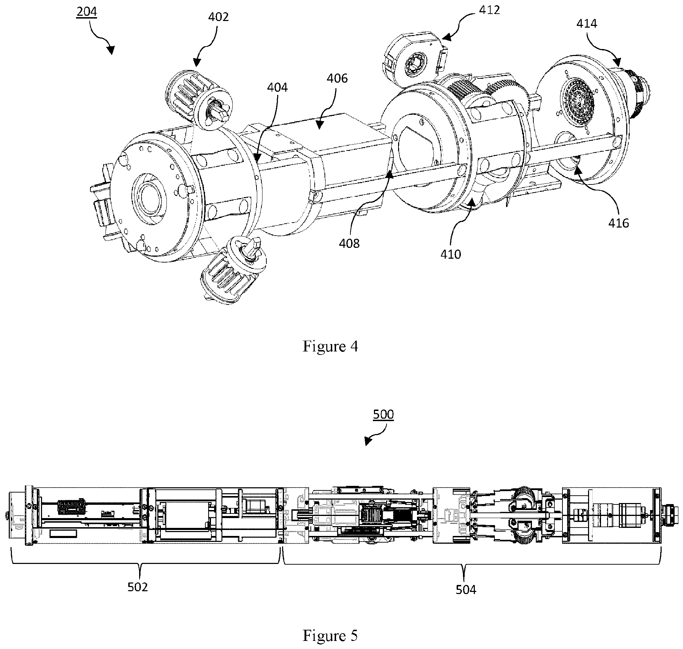

Figure 4 illustrates an exploded view of the crawling unit (204) configured for inspecting defects in the straight hollow cylindrical object. The exploded view of the crawling unit includes a plurality of driving wheels (402), a plurality of idler wheels (410), a motor with a rotary encoder (408), a gear (404), a linear encoder (412), a plurality of connectors. The plurality of connectors includes a first connector (414) supplying power and a signal (414) and a second connecter for data connectivity (416). The plurality of driving wheels (402) is configured radially on the crawling unit (204) and maintain a continuous contact with an inner surface of the hollow cylinder. The driving wheels (402) are spring loaded and help in maintaining the concentricity with the longitudinal axis of straight hollow cylindrical object to be inspected. The driving wheels rotate parallel to the longitudinal axis of the straight hollow cylindrical object to provide a smooth and stable linear movement of the inspection device (200) inside the hollow cylindrical object. The rotation of driving wheels (402) is achieved by a gear mechanism (404) and is driven by a motor with a rotary encoder (408). The plurality of idler wheels (410) is configured radially on the crawling unit (204) and maintains a continuous contact with an inner surface of the hollow cylinder and provides balance and stability to the inspection device (200). A linear encoder (412) is connected to one of the idler wheels that accurately measure the linear displacement of the inspection device (200) inside the straight hollow cylindrical object. This can represent a significant advantage because it can enable the images / data that are acquired by the inspection head (202) to be accurately associated with a position along the length of the hollow cylinder. This can be especially beneficial when compared with alternative systems that require an operator to manually insert an inspection device into a gun barrel. In this example, one end of the crawling unit (204) is connected to the inspection head (202) and the other end is free. The power and signal connector (414) and the data connector (416) are disposed at the free end of the crawling unit (204). The power and signal connector (414) and data connector (416) are electrically connected with electronics unit (306) to provide power and data connectivity through an internal cable harness (not shown) passed through a central channel provided throughout the inspection device.

Like the first embodiment as explained above, in an exemplary embodiment of the present invention, the robotic inspection device with a radially expandable mechanism is disclosed. The embodiment can be better explained by referring to the Figures from figure 5 to figure 8 in conjunction with the description in following sections.

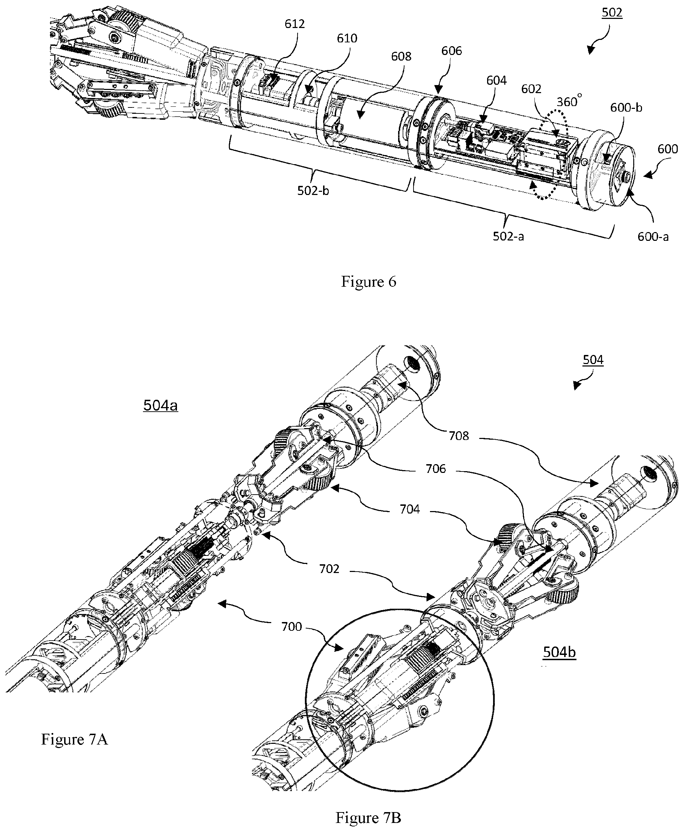

Figure 5 illustrates an internal view of the robotic inspection device (500) with a radially expandable mechanism. The robotic inspection device (500), hence further again referred as an inspection device (500), comprises an inspection head (502), and a crawling unit with an expansion mechanism (504). The inspection head (502) is rotatably connected to the crawling unit with expansion mechanism (504). The inspection head (502) can freely rotate 360 degrees both clockwise or anticlockwise on its own axis to inspect and scan the internal radial surface of the straight hollow cylindrical object, preferably a gun barrel of different diameters ranging from 105mm to 155mm. The construction of the inspection head (502) and the crawling unit with expansion mechanism (504) can be better explained by referring to Figures 6, 7 and 8.

Figure 6 illustrates an assembly view of the inspection head (502), which comprises a freely rotating inspection head (502a) and its rotary drive mechanism (502b). The rotating inspection head (502a) comprises of an image acquisition unit (600), a laser scanning unit (602) and an electronics unit (604). The construction and working of the inspection head (502) are exactly the same as explained in the previous embodiment for the inspection head (202). One skilled in the art can easily find similarities in the construction and working of the inspection head in both the embodiments. It is recommended to read paragraphs 108 to 115 for a detailed construction of the inspection head (202) as it is explained for the first embodiment.

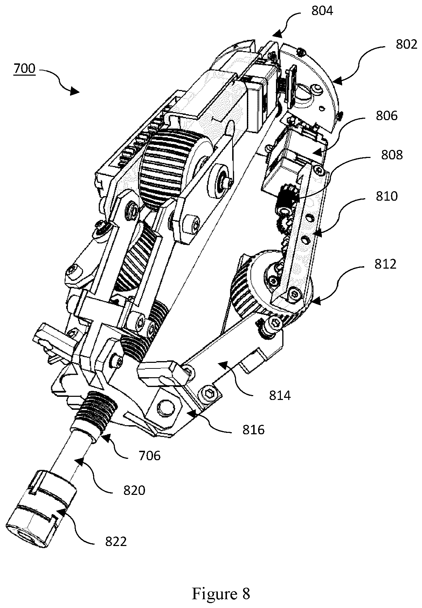

Now the construction and working of the crawling unit with expansion mechanism (504) can be better explained by referring to Figures 7 and 8.

Figure 7 illustrates the construction and assembly of a crawling unit with an expansion mechanism (504). The crawling unit with expansion mechanism (504) comprises a radially expandable drive unit (700), a junction unit (702) connecting the radially expandable drive unit (700) with a radially expandable idler unit (704), a central ball screw (706) to actuate radial expansion and a motor (708) to rotate the ball screw (706).

When the motor (708) rotates the ball screw (706), the ball screw (706) simultaneously actuates the expansion mechanism for both the drive unit 700 and idler unit (704) via a scissor mechanism.

Figures 7A and 7B illustrate the fully closed and fully expanded configurations of the radially expandable drive unit assembly (504a) and (504b) respectively.

The radially expandable mechanism can be better explained by referring to Figure 8.

Figure 8 illustrates a detailed view of a radially expandable drive unit assembly (700). The radially expandable drive unit assembly (700) includes a fix end (802), a motor mounting bracket (804), a drive motor (806), a main drive gear (808), a rocker arm (810), a plurality of drive wheels (812), a plurality of pivot brackets (814), a movable end (816), a central ball screw (706), a drive shaft 820 and a motor adapter (822). Each of the plurality of drive wheels (812) maintains a continuous contact with the inner diameter of the hollow cylinder. Each of the wheels is configured to provide a linear motion to the crawler unit along the hollow cylindrical object. The expandable arms are configured to extend such that the associated wheels contact an internal surface of the hollow cylinder to provide perfect anchoring, stability, and concentricity with the straight hollow cylindrical object of different diameters. Each of the extendable arms is configured to match diameters of the hollow cylinder. The motor adapter (822) is mounted on the driver shaft (820). The rocker arms are coupled to the drive wheels (812) and to the movable end (816). The pivot brackets (814) are coupled to the drive wheel (812). The main drive gear (808) is coupled to the rocker arm (810) with a gear train housing. The fix end (802) and the motor mounting bracket (804) are coupled to the drive motor (806). One can easily identify the similarity of the radially expandable mechanism for idler unit (704) with the radially expandable mechanism for drive unit (700).

The distinct advantages of this expansion mechanism include flexibility and suitability of the same device for inspection and measurement of straight hollow cylindrical objects of different calibers or diameters. With a little modification in the mechanism, or using any other suitable mechanism, one having ordinary skills in the art can increase the range of expansion to suit even higher calibers of guns or different sizes of straight hollow cylindrical objects and for other non-military applications such as inspection and measurement of pipes in oil and gas or chemical industries. Many such applications can be thought of for inspection and measurements of straight hollow cylindrical objects.

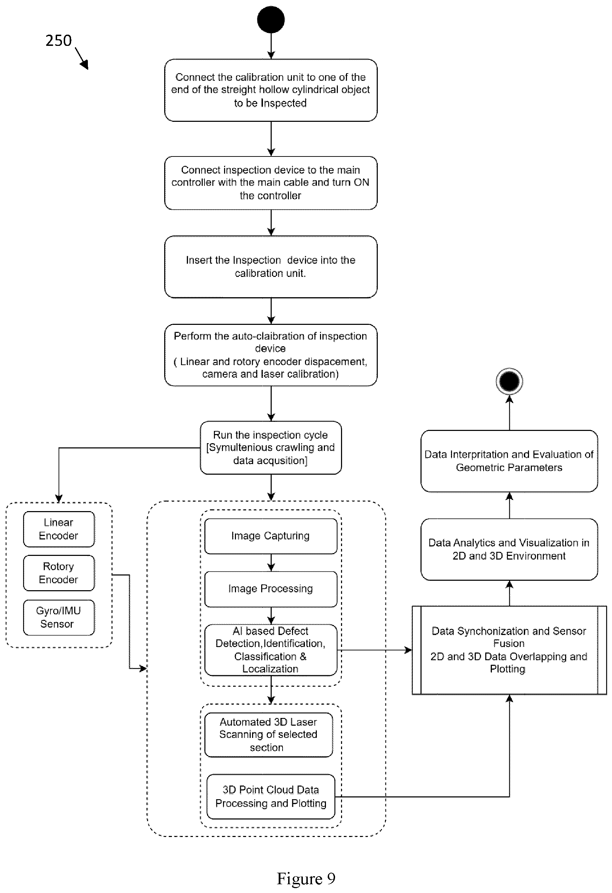

Figure 9 indicates the inspection and measurement process flow. The process starts with connecting the inspection device (200) to the controller (400) by means of a connecting medium, such as the cable (300) that is described above. The inspection device (200) is calibrated using a standardized calibration unit (170), which is attached to the hollow cylindrical object before actual measurements are taken. Thereafter the automated data acquisition, inspection and measurement of internal surface of the straight hollow cylindrical object are performed by the inspection device (200). Then the data synchronization, data analysis, defect detection and localization, defect measurements, data visualization, and data interpretation are performed by the controller. The data acquisition involves image capturing by the plurality of sensors and the images are then analyzed by the electronic unit inside the inspection device (200).

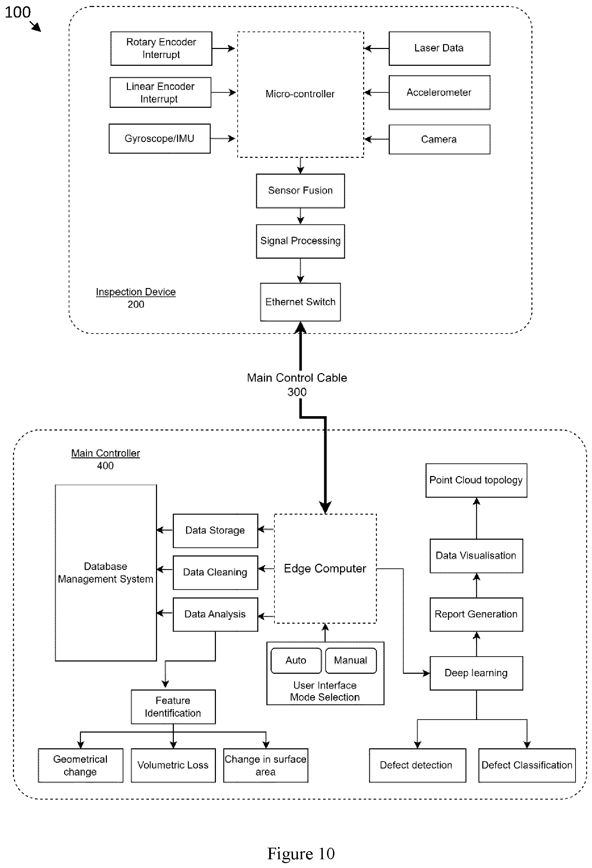

Figure 10 indicates an inspection and measurement data architecture right from data acquisition using inspection device (200), fed to the main controller (400) through a connecting medium (300). The main controller performs the tasks like data storage, data cleansing, data analysis, defect detection, classification and identification through feature recognition, defect localization and measurement, data visualization and interpretation and report generation. The raw and processed data can be then fed to the cloud server for data warehousing which further opens immense flexibility to use the data to perform detailed analysis, such as time series forecasting, trend analysis, health assessment and estimation of remaining useful life inspected objects particularly large caliber gun barrels. For example, in an army unit it is possible to have different field artillery guns and tank guns of different calibers ranging from 105mm caliber guns to 155mm large caliber howitzers. With the features of the expansion mechanism, the same inspection device can be used to inspect and measure geometric parameters of gun barrels of different caliber weapons within the range from 105mm to 155mm.

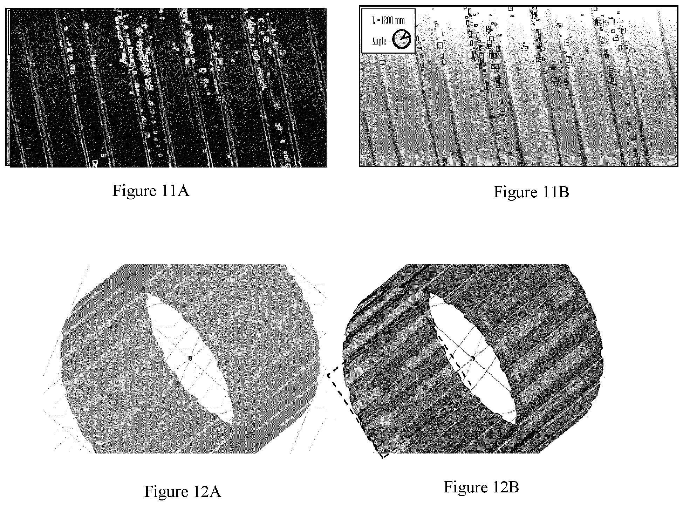

Figure 11 shows a sample 2D image captured by the image acquisition unit (302), wherein Figure 11A shows a sample raw image and Figure 11B shows a sample processed image where the detected and identified defects are can be seen with bounding boxes and are tagged and labeled with position coordinates.

Figure 12 shows a section of a rifled barrel with a surface topology mapped with raw 3D point cloud data (Figure 12A) generated by the laser scanning unit (304). The processed data, with defect measurement highlighting the defects based on the depth of each defect, are shown as a heat map in Figure 12B.

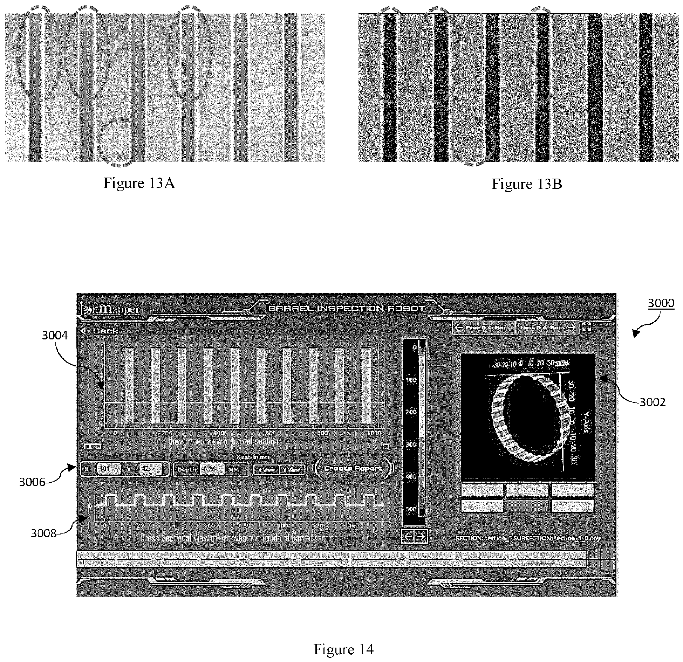

Like Figure 12, Figure 13 shows the raw and processed laser scanned data and surface topology, defect detection and measurement in unwrapped format for better visualization.

Figure 14 shows a software depiction of a graphical user interface (GUI) with a dashboard showing different views, plots, and tables to provide better visualization and interpretation of inspection and measurement data.

Exemplary embodiments discussed above may provide certain advantages. Though not required to practice aspects of the disclosure, these advantages may include those provided by the following features.

Some embodiments enable the inspection and measurement of the straight hollow cylindrical objects of specific diameter or caliber and some embodiments enables the inspection and measurement of the straight hollow cylindrical objects of different diameters or calibers with the same device. The system can be used to inspect gun-barrels of large caliber guns. This helps to perform health assessment, operational effectiveness, operational safety, and estimation remaining useful life of large caliber gun barrels.

Some embodiments enable the system for inspecting a straight hollow cylindrical object, which will help to detect the defects in the gun barrels. The gun barrel is exposed to high pressure, temperature, shocks, and friction, in addition to a corrosive mixture of gases and residue generated after the combustion of propellants. The device will help to detect internal defects.

Some embodiments enable a system for inspecting straight hollow cylindrical object by analyzing a 2D image and 3D laser scan data and measures a geometric parameter of the internal surface of the gun barrel.

In one of the exemplary embodiments of the present invention, the controller is configured to receive 2D image and 3D laser scan data captured by the image acquisition unit (302), and a laser scanning unit (304) and to measure a geometric parameter of the internal surface of the straight hollow cylindrical object. Thereafter provides the visualization and interpretation of the final inspection and measurement data or provide the inspection and measurement data in a human readable format.

Although implementations of the said system for inspecting and measurement of straight hollow cylindrical object have been described in language specific to structural features and/or methods, it is to be understood that the appended claims are not necessarily limited to the specific features or methods described. Rather, the specific features and methods are disclosed as examples of implementations for the inspection of the hollow cylinder.

| | |
|---|---|
| 100 | an inspection and measurement system for straight hollow cylindrical objects |
| 150 | hollow cylindrical object/Gun Barrel |
| 170 | Calibration unit |
| 200 | Inspection Device |
| 204 | Crawling Unit |
| 202 | Inspection Head |
| 202a | Rotating head |
| 202b | Rotary drive mechanism |
| 300 | Cable |
| 302 | Image Acquisition Unit |
| 304 | Laser Scanning Unit |
| 306 | Electronics Unit |
| 308 | Slip ring |
| 310 | Motor with rotary encoder |
| 306 | Sensor Fusion Electronic Unit |
| 400 | Controller |
| 402 | Self-adjusting drive wheels |
| 404 | Gear assembly |
| 406 | Main drive motor for forward and backward axial motion |
| 408 | Linear Encoder |
| 410 | Free Idler wheel assembly |
| 412 | First connector |
| 414 | Second connector |
| 500 | Self- Adjusting universal inspection and measurement device for gun barrels of different caliber sizes |
| 502 | Rotating inspection and measurement unit |
| 504 | Crawling unit |
| 505 | Rotating inspection and measurement Unit Assembly |
| 502a | Rotating head |
| 502b | Rotary Drive Unit |
| 600 | Integrated Camera and lights |
| 600a | Forward looking camera with integrated lights |
| 600b | Side looking camera with integrated lights |
| 602 | Laser distance sensor |
| 604 | Electronics module |
| 606 | Bearing Hub |
| 608 | Slip ring |
| 610 | Motor adapter |
| 612 | Motor with Encoder |
| 700 | Radially expandable Main Drive wheel unit |
| 702 | Junction Unit |
| 704 | idler wheel unit |
| 708 | Motor for radial expansion unit |
| 802 | Fix end |
| 804 | Motor mounting bracket |
| 806 | Drive motor |
| 808 | Main drive gear |
| 810 | Rocker arm with gear train housing |
| 812 | Drive wheel |
| 814 | Pivot bracket |
| 816 | Movable end |
| 820 | Drive shaft |
| 822 | Motor adapter |
| 3000 | User interface |
| 3002 | 3D visualization of laser scanned section of gun barrel surface |
| 3004 | Surface topology and visualization of laser scanned unwrapped section of gun barrel surface |
| 3006 | Longitudinal and lateral coordinates of scannes gun barrel section |
| 3008 | Cross sectional view of Geometric parameter and measurements of barrel surface |

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, to thereby enable others skilled in the art to best utilize the present invention and various embodiments with various modifications as are suited to the particular use contemplated. It is understood that various omission and substitutions of equivalents are contemplated as circumstance may suggest or render expedient, but such are intended to cover the application or implementation without departing from the scope of the present invention.

## Claims

1. An inspection and measurement system (100) for a hollow cylindrical object, the system (100) comprising:
an inspection device (200,500) which includes a crawling unit (204) and an inspection head (202), wherein:
the inspection head (202) comprises a first sensor (302) and a second sensor (304), each for sensing properties of an internal surface of the hollow cylindrical object; and
the crawling unit (204) is configured to move the inspection head along the hollow cylindrical object; and
a controller, which is configured to:
activate the crawling unit (204) and the inspection head (202) such that the inspection head (202) is moved along the hollow cylindrical object and such that the first sensor (302) provides 2-dimensional image data of the internal surface of the hollow cylindrical object;
process the 2-dimensional image data to identify any surface defects in the internal surface of the hollow cylindrical object and to determine the location on the internal surface of those surface defects;
activate the crawling unit (204) and the inspection head (202) such that the inspection head (202) is moved along the hollow cylindrical object and such that the second sensor (304) provides depth-data associated with the identified surface defects in the internal surface of the hollow cylindrical object; and
process the 2-dimensional image data and the depth-data in order to determine one or more parameters of the identified surface defects.

2. The system of claim 1, wherein the controller is configured to apply an artificial intelligence algorithm when processing the 2-dimensional image data to identify any surface defects in the internal surface of the hollow cylindrical object.

3. The system of claim 1 or claim 2, wherein the one or more parameters of the identified surface defects comprise:
a maximum depth of the identified surface defect;
a volume of the identified surface defect;
a type of the identified surface defect; and
a change in internal diameter of the hollow cylindrical object.

4. The system of any preceding claim, wherein the controller is further configured to determine the number of identified surface defects in the hollow cylindrical object.

5. The system of any preceding claim, wherein the controller is configured to:
combine the 2-dimensional data and the depth-data in order to provide combined-data; and
process the combined-data in order to determine the one or more parameters of the identified surface defects.

6. The system of any preceding claim, wherein:
the first sensor has a field of view that includes the entire circumference of the internal surface of the hollow cylindrical object; and
the second sensor has a field of view that includes only a subset of the entire circumference of the internal surface of the hollow cylindrical object.

7. The system of claim 6, wherein the inspection head (202) is rotatably connected to the crawling unit (204).

8. The system of any preceding claim, wherein the controller is configured to determine the locations of the surface defects with reference to an open end of the hollow cylindrical object.

9. The system of any preceding claim, wherein the controller is configured to:
activate the crawling unit and the inspection head such that the second sensor only provides depth-data associated with regions of the internal surface of the hollow cylindrical object that include the identified surface defects.

10. The system (100) of any preceding claim, wherein the first sensor includes at least one camera with integrated illumination or LED lights.

11. The system (100) of any preceding claim, wherein the second sensor comprises a laser scanning unit (304) that includes a laser distance sensor.

12. The system (100) of any preceding claim, wherein the crawling unit (204) includes,
a plurality of driving wheels (402) and a plurality of idler wheels (410) configured radially to maintain a continuous contact with an inner surface of the hollow cylindrical object to be inspected;
a motor with a rotary encoder (408) that drives the plurality of driving wheels (402);
a linear encoder (412) connected to one of the idler wheels, wherein the linear encoder (412) is configured to measure linear displacement of the inspection device (200); and
a plurality of connectors electrically coupled to the electronics unit (306).

13. The system of claim 12, wherein the driving wheels (402) are spring loaded wheels that maintain concentricity with the longitudinal axis of the hollow cylindrical object to be inspected.

14. The system of claim 12 or claim 13, wherein the plurality of idler wheels (410) are configured to provide balance and stability to the inspection device (200) when passing through the internal surface of the hollow cylindrical object to be inspected.

15. A method for inspection and measurement of a hollow cylindrical object (250) using an inspection device (200,500), wherein the inspection device comprises:
an inspection head (202) that comprises a first sensor and a second sensor, each for sensing properties of an internal surface of the hollow cylindrical object; and
a crawling unit (204) that is configured to move the inspection head along the hollow cylindrical object;
wherein the method comprises:
activating the crawling unit and the inspection head such that the inspection head is moved along the hollow cylindrical object and such that the first sensor provides 2-dimensional image data of the internal surface of the hollow cylindrical obj ect;
processing the 2-dimensional image data to identify any surface defects in the internal surface of the hollow cylindrical object and to determine the location on the internal surface of those surface defects;
activating the crawling unit and the inspection head such that the inspection head is moved along the hollow cylindrical object and such that the second sensor provides depth-data associated with the identified surface defects in the internal surface of the hollow cylindrical object; and
processing the 2-dimesnional image data and the depth-data in order to determine one or more parameters of the identified surface defects.
